# EUROPÄISCHE PATENTSCHRIFT

(11) **EP 3 682 200 B1**
(45) Veröffentlichungstag und Bekanntmachung des Hinweises auf die Patenterteilung: **29.03.2023**
(21) Anmeldenummer: 18766251.5
(22) Anmeldetag: 10.09.2018
(51) Int. Cl.: G01J 1/42, B23K 26/70, B23K 26/04

(54) **STRAHLLAGENMESSSYSTEM UND VERFAHREN ZUR BESTIMMUNG UND KORREKTUR DER STRAHLLAGE EINES LASERSTRAHLS**
BEAM POSITION MEASURING SYSTEM AND METHOD FOR DETERMINING AND CORRECTING THE BEAM POSITION OF A LASER BEAM
SYSTÈME DE MESURE DE POSITION DE FAISCEAU ET PROCÉDÉ DE DÉTERMINATION ET DE CORRECTION DE LA POSITION D'UN FAISCEAU LASER

(30) Priorität: 11.09.2017 DE 102017215973
(43) Veröffentlichungstag der Anmeldung: 22.07.2020
(73) Patentinhaber: Robert Bosch GmbH, 70442 Stuttgart (DE)
(72) Erfinder: MIKHAYLOV, Dmitriy, 71272 Renningen (DE); GAUCH, Roland, 71272 Renningen (DE)
(86) Internationale Anmeldenummer: PCT/EP2018/074250
(87) Internationale Veröffentlichungsnummer: WO 2019/048657

(56) Entgegenhaltungen:
- DE-A1-102016 001 355
- TW-A- 201 338 900
- US-A1- 2006 202 115
- US-A1- 2009 059 766

## Beschreibung

### Stand der Technik

Die Erfindung betrifft ein Strahllagenmesssystem zur Bestimmung der Strahllage eines Laserstrahls und ein ein Verfahren zur Bestimmung und Korrektur der Strahllage eines Laserstrahls gemäß dem jeweiligen Oberbegriff der unabhängigen Ansprüche.

Bei Laserstrahlquellen können im Laserbetrieb beispielsweise unerwünschte thermische Effekte auftreten, durch die sich die Lage der Ausgangsstrahlung in Winkel und Position oder der Strahldurchmesser ändern. In vielen Anwendungsbereichen der Lasertechnik, beispielsweise in der Materialbearbeitung, wird jedoch eine hohe Zeige-Stabilität gefordert. Jeder Positions- oder Winkelfehler des auf das Werkstück einfallenden Laserstrahls wirkt sich auf die Positioniergenauigkeit des abtragenden Laserspots aus und verschlechtert dadurch die Präzision der Bearbeitung. Abweichungen hinsichtlich des Durchmessers des Eingangsstrahls wirken sich auf dem Fokusdurchmesser bzw. der Intensitätsverteilung des Laserstrahls in der Bearbeitungsebene und damit auch auf dem Bearbeitungsergebnis aus.

Um Abweichungen der Strahllage eines Laserstrahls zu erkennen und ausgleichen bzw. korrigieren zu können sind Strahllagemesssysteme bekannt, bei denen ein Nebenstrahl aus dem Laserstrahl ausgekoppelt und zur Lagebestimmung einem optischen Positionssensor zugeführt ist. Um sowohl eine laterale Verschiebung als auch eine Abweichung der Ausbreitungsrichtung des Laserstrahls nachweisen zu können sind nachteilig zwei getrennte Nebenstrahlen erforderlich, welche jeweils einem optischen Positionssensor zugeführt sind.

Diffraktive optische Elemente (DOE) werden zur Strahlformung, beispielhaft bei Außer-Achs-Beleuchtung, für Lithographie oder Laser-Materialbearbeitung wie Schneiden, Schweißen oder für Ablation eingesetzt. Unveränderbare DOE aus Glas, beispielhaft mittels Elektronenstrahl- oder Laser-Lithografie hergestellt, werden zunehmend durch programmierbare Strahlformer ersetzt. Programmierbare Strahlformer zur Beeinflussung der örtlichen und zeitlichen Intensitätsverteilung eines Laserstrahls sind als "Spatial Light Modulator (SLM)" auf Basis von Flüssigkristallen oder als "Digital Micromirror Device" in Form von ein- oder zweidimensionalen Anordnungen bewegbarer Spiegel bekannt. Die Spatial Light Modulators bewirken örtliche Phasenänderungen durch Änderung der optischen Weglänge oder des Brechungsindex. Bei Kenntnis der Eigenschaften des Eingangsstrahls kann mit ihnen eine gewünschte Form einer Wellenfront eines Ausgangsstrahls gezielt eingestellt werden. Auch kann mittels eines SLM im Fernfeld auf einer Arbeitsfläche der Laser-Bearbeitungsanlage eine gewünschte Intensitätsverteilung des Laserstrahls und damit eine gewünschte Strahlform eingestellt werden.

US2006/0202115, DE102016001355, US2009/0059766 und TW201338900 offenbaren Strahllagenmesssysteme nach dem Oberbegriff von Anspruch 1.

Es ist Aufgabe der Erfindung, eine Vorrichtung und ein Verfahren bereitzustellen, mit denen eine genaue und schnelle Erkennung einer Abweichung einer Strahllager eines Laserstrahls ermöglicht wird.

### Offenbarung der Erfindung

Die das Strahllagenmesssystem betreffende Aufgabe der Erfindung wird gelöst mit einem System nach Anspruch 1.

Das Ergebnis der Strahlformung ist sehr empfindlich gegenüber der Position, in der der ungeformte Strahl auf den Strahlformer trifft. Trifft der Laserstrahl oder der Nebenstrahl nicht in der vorgesehenen Position auf den Strahlformer, so ändert sich die Intensitätsverteilung des geformten Nebenstrahls auf dem Positionssensor sehr stark. Das mit dem Positionssensor erfasste Intensitätsprofil stimmt dann nicht mehr mit dem gewünschten Intensitätsprofil, wie es mit einem korrekt ausgerichtet auf den Strahlformer auftreffenden Laserstrahl oder Nebenstrahl erhalten wird, überein. Weiterhin ändert sich in Abhängigkeit von der Strahllage des Laserstrahls die Lage des Fokus, in welcher der geformter Nebenstrahl auf dem Positionssensor abgebildet wird. Aus der mit dem Positionssensor bestimmten Intensitätsverteilung können somit Informationen über die Strahllage des Laserstrahls bestimmt werden. Besondere Vorteile ergeben sich dadurch für eine Laserbearbeitungsanlage umfassend ein solches Stahllagenmesssystem, um die Feststellung einer Strahlabweichung und einer schnellen Korrekturmöglichkeit zu erwirken. Auf diese Weise lässt sich die Bearbeitungsgenauigkeit der Laserbearbeitungsanlage deutlich steigern bzw. verbessern.

Vorzugsweise kann es vorgesehen sein, dass als Strahllage eine laterale Position des Laserstrahls und/oder ein zumindest Ausbreitungswinkel des Laserstrahls und/oder ein Durchmesser des Laserstrahls bestimmbar ist. Aus der Abweichung des mit dem Positionssensor erfassten Intensitätsprofils gegenüber dem gewünschten Intensitätsprofil kann die Strahlposition des einfallenden Laserstrahls sehr genau bestimmt werden. So kann aus der Veränderung des Strahlprofils im Fokus des geformten Nebenstrahls die Strahlposition des einfallenden Laserstrahls im Mikrometerbereich berechnet werden. Aus der Abweichung der Lage des Fokus des auf den Positionssensor abgebildeten Nebenstrahls kann der Ausbreitungswinkel des einfallenden Laserstrahls ermittelt werden. Zusätzlich kann auch eine Änderung des Durchmessers des einfallenden Laserstrahls aus der Intensitätsverteilung im Fokus des Nebenstrahls errechnet werden. Eine solche Änderung des Durchmessers des Laserstrahls resultiert in einer charakteristischen Veränderung des Strahlprofils. Diese kann eindeutig von einer Veränderung des Strahlprofils aufgrund eines lateral versetzten Laserstrahls unterschieden werden. Gegenüber bekannten Strahllagesensoren kann mit der erfindungsgemäßen Strahllagenmesssystem somit mit ausschließlich einem Positionssensor neben einer lateral Abweichung des Laserstrahls in X-Richtung und in Y-Richtung sowie einer Abweichung der Ausbreitungsrichtung um einen Winkel α in X-Richtung oder einen Winkel β in Y-Richtung auch der Durchmesser des Laserstrahls erfasst werden. Gegenüber bekannten Strahllagenmesssystem ist demnach der Einsatz von erforderlichen Positionssensoren vorteilhaft auf ein Minimum reduziert.

Eine geeignete Strahlformung des Nebenstrahls bzw. des Laserstrahls und damit des ausgekoppelten Nebenstrahls kann dadurch erreicht werden, dass der Strahlformer bevorzugt als programmierbarer Strahlformer ausgebildet ist. Alternativ ist für diesen Zweck auch der Einsatz der Strahlformer als diffraktives optisches Element oder als refraktives optisches Element oder als Amplitudenmodulator oder als kombinierter Amplituden- und Phasenmodulator ausgebildet. Feste Strahlformer in Form von diffraktiven oder refraktiven optischen Elementen sind wartungsarm und können über einen langen Zeitraum verwendet werden. Programmierbare Strahlformer, beispielsweise in Form eines sogenannten "Spatial Light Modulator (SLM)" auf Basis von Flüssigkristallen oder als "Digital Micromirror Device" in Form von ein- oder zweidimensionalen Anordnungen bewegbarer Spiegel, können vorteilhaft derart programmiert werden, dass ihr Formungsmuster eine Intensitätsverteilung des Nebenstrahls ergibt, welche leicht auszuwerten ist und sich bei Abweichung der Strahllage von der gewünschten Position schnell verändert. Das Formungsmuster kann dabei an den jeweiligen optischen Aufbau, beispielsweise an die Intensitätsverteilung des noch nicht geformten Laserstrahls, angepasst werden.

Um eine Abbildung des Nebenstrahls auf dem Positionssensor zu erhalten kann es vorgesehen sein, dass nach dem Strahlformer ein refraktives oder diffraktives Abbildungssystem zur Abbildung des geformten Nebenstrahls auf den Positionssensor angeordnet ist oder dass der Strahlformer integral Strukturen einer Fresnel-Linse zur Abbildung des geformten Nebenstrahls auf den Positionssensor aufweist oder dass der Strahlformer integral als diffraktiver Strahlformer auf einer refraktiven Linse aufgebracht ist oder dass ein refraktiver Strahlformer mit refraktiv fokussierenden Eigenschaften verwendet ist. Insbesondere durch die Integration des Abbildungssystems in den Strahlformer in Form einer Fresnel-Linse oder der Kombination eines diffraktiven Strahlformers mit einer refraktiven Linse oder der Verwendung eines refraktiven Strahlformers mit refraktiv fokussierenden Eigenschaften kann durch die Einsparung eines ansonsten zusätzlich erforderlichen Abbildungssystems (Linse) ein kostengünstiger Aufbau des Strahllagenmesssystems erreicht werden.

Die Empfindlichkeit des Strahlformverzugs in Abhängigkeit von der Strahllage hängt von der Strahlformung selbst ab. Ist es vorgesehen, dass die Empfindlichkeit Strahllagenmesssystem gegenüber einer Abweichung der Strahllage des Laserstrahls durch Verwendung von Strahlformern mit unterschiedlichen Formungsmustern einstellbar ist, so können unterschiedliche Strahlformen für eine Grob- und eine Feinvermessung der Strahllage verwendet werden. Die Lage des Laserstrahls kann so, beispielsweise während eines Justiervorgangs, zunächst grob und dann sehr genau erfasst und korrigiert werden. Der Einsatz unterschiedlicher Formungsmuster ist insbesondere bei Verwendung programmierbarer Strahlformer schnell und einfach umsetzbar.

Eine selbsttätige Korrektur der Strahllage des Laserstrahls kann dadurch ermöglicht werden, dass das Strahllagenmesssystem Mittel zur selbstständigen Korrektur der Strahllage des Laserstrahles aufweist, indem das Signal des Positionssensors einer Steuereinheit zugeführt ist und dass die Steuereinheit zur Korrektur der Strahllage mittels zumindest eines mit der Steuereinheit verbundenen Aktuators ausgebildet ist. Der Aktuator kann optische Komponenten im Strahlengang des Laserstrahls, beispielsweise Ablenkspiegel oder Linsensysteme, verschieben oder sonstigen Einfluss auf strahlführende Komponenten oder den Laser selbst ausüben und so eine Abweichung der Strahllage ausgleichen.

Die das Verfahren betreffende Aufgabe der Erfindung kann durch ein Verfahren nach Anspruch 9 gelöst werden. Der Strahlformer kann beispielsweise als programmierbarer Strahlformer oder als diffraktives optisches Element oder als refraktives optisches Element oder als Amplitudenmodulator ausgebildet. Das mit solchen Strahlformern erzielte Intensitätsprofil ist stark abhängig davon, ob der zu formende Laserstrahl bzw. Nebenstrahl das Formungsmuster des Strahlformers exakt auf der gewünschten Position trifft. Bei einer Abweichung des mit dem Positionssensor erfassten Intensitätsprofils von einem erwarteten Intensitätsprofil kann somit einfach und schnell auf eine Abweichung der Lage des Laserstrahls von einer vorgesehenen optischen Achse geschlossen werden. Dabei kann anhand der erfassten Intensitätsverteilung auf die vorliegende Abweichung zurückgerechnet werden.

Entsprechend der Erfindung ist es vorgesehen, dass mit dem Positionssensor eine Intensitätsverteilung des geformten Nebenstrahls bestimmt wird, dass aus der Intensitätsverteilung des geformten Nebenstrahls eine laterale Verschiebung des Laserstrahls bestimmt wird und/oder ein Durchmesser des Laserstrahls bestimmt wird und/oder dass aus einer seitlichen Verschiebung des Fokus des geformten Nebenstrahls auf dem Positionssensor ein Ausbreitungswinkel des Laserstrahls bestimmt wird. Bereits kleine laterale Abweichungen des Auftragspunktes führen zu deutlichen Abweichung in dem erhaltenen Strahlprofil. Eine laterale Abweichung der Lage des Laserstrahls kann somit sowohl in X- als auch in Y-Richtung mit großer Genauigkeit nachgewiesen werden. Ebenfalls führt eine Veränderung des Durchmessers des Laserstrahls zu einer deutlichen Veränderung des geformten Strahlprofils. Diese kann eindeutig von einer Veränderung des Strahlprofils, welche bei einem lateralen Versatz des Laserstrahls erhalten wird, unterschieden und damit sowohl qualitativ als auch quantitativ nachgewiesen werden. Eine Winkelabweichung des Laserstrahls führt zu einer Verschiebung der Lage des Fokus des abgebildeten Nebenstrahls auf dem Positionssensor. Das erfindungsgemäße Verfahren ermöglicht somit unter Verwendung nur ausschließlich eines Positionssensors, sowohl eine laterale Abweichung als auch eine Winkelabweichung des Laserstrahls in X- und Y-Richtung sowie eine Abweichung des Durchmessers des Laserstrahls von einem vorgegebenen Wert nachzuweisen.

Besonders bevorzugt kann es vorgesehen sein, dass der Laserstrahl ein Gaußprofil aufweist, dass der Strahlformer das Gaußprofil in ein gewünschtes Profil mit achssymmetrischer Intensitätsverteilung in der Abbildungsebene auf dem Positionssensor formt und dass bei einer unsymmetrischen Umverteilung der Intensitätsverteilung des geformten Nebenstrahls auf dem Positionssensor auf eine laterale Verschiebung des Laserstrahls geschlossen wird und dass bei einer rotationssymmetrischen Umverteilung der Intensitätsverteilung des geformten Nebenstrahls auf dem Positionssensor auf eine Abweichung des Durchmessers des Laserstrahls geschlossen wird. Laterale Abweichungen des Laserstrahls von der gewünschten optischen Achse lassen sich somit eindeutig von Abweichungen des Durchmessers des einfallenden Laserstrahls gegenüber einem vorgegebenen Durchmesser unterscheiden.

Das erfindungsgemäße Strahllagenmesssystem kann vorteilhaft zur Durchführung des erfindungsgemäßen Verfahrens verwendet werden.

Die Erfindung wird im Folgenden anhand eines in den Figuren dargestellten Ausführungsbeispiels näher erläutert. Es zeigen:
Figur 1 in einer schematischen Darstellung ein Strahllagenmesssystem zur Bestimmung der Strahllage eines Laserstrahls mit einem Strahlformer im Strahlengang eines Nebenstrahls,
Figur 2 das in Figur 1 gezeigte Strahllagenmesssystem mit einem Strahlformer im Strahlengang eines Laserstrahls,
Figur 3 Intensitätsprofile und Fokuslagen eines geformten Nebenstrahls bei verschiedenen Abweichungen eines Laserstrahls von einer optischen Achse und
Figur 4 Intensitätsprofile eines geformten Nebenstrahls bei unterschiedlichen Durchmessern eines einfallenden Laserstrahls.

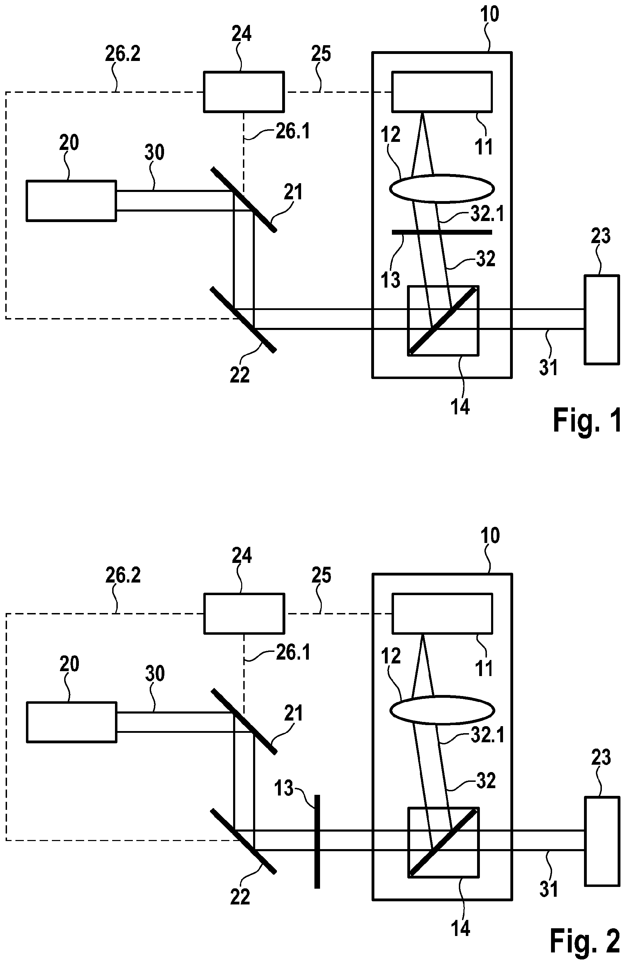

Figur 1 zeigt in einer schematischen Darstellung ein Strahllagenmesssystems zur Bestimmung der Strahllage eines Laserstrahls 30 mit einem Strahlformer 13 im Strahlengang eines Nebenstrahls 13, beispielsweise innerhalb einer Laserbearbeitungsanlage (nicht dargestellt). Der Laserstrahl 30 wird von einem Laser 20 erzeugt und auf einen ersten verstellbarer Spiegel 21 und einen nachfolgenden zweiten verstellbaren Spiegel 22 gelenkt. Der erste und der zweite Spiel 21, 22 in diesem Ausführungsbeispiel stehen stellvertreten für mit einer Steuereinheit ansteuerbare Aktuatoren und/oder optische Komponenten, durch welche mittels eines Steuersignales des Steuereinheit der Strahlverlauf und damit die Strahllage definiert geändert werden kann. Der erste verstellbarer Spiegel 21 ist mit einer ersten Steuerleitung 26.1 und der zweite verstellbare Spiegel 22 mit einer zweiten Steuerleitung 26.2 mit einer Steuereinheit 24 verbunden. Dem zweiten verstellbaren Spiegel 22 nachfolgend ist ein Strahlteiler 14 in dem Strahlengang des Laserstrahls 30 angeordnet. Er ist einem Strahllagesensor 10 zugeordnet. Der Strahlteiler 14 ist vorliegend als Glaskeil mit einer schwachreflektierenden Vorderseite und einer antireflektiv beschichteten Rückseite ausgebildet. Es ist jedoch auch denkbar, einen diffraktiven Strahlteiler 14 vorzusehen. Der Strahlteiler 14 teilt den einfallenden Laserstrahl 30 in einen Prozessstrahl 31 und einen Nebenstrahl 32. Der Strahlteiler 14 ist derart ausgebildet, dass die geometrischen Lagen des gebildeten Prozessstrahls 31 und Nebenstrahls 32 zueinander und zum einfallenden Laserstrahl 30 eindeutig bestimmt sind. Es können nicht dargestellt weitere Teilstrahle aus dem Laserstrahl 30 ausgekoppelt werden, welche zur Durchführung des erfindungsgemäßen Messverfahrens jedoch nicht erforderlich sind. Der Prozessstrahl 31 ist einem Arbeitsprozess zugeführt. Vorliegend ist der Prozessstrahl 31 auf ein zu bearbeitendes Werkstück 23 gelenkt. Dabei können nicht dargestellt weitere optische Komponenten in dem Strahlengang des Prozessstrahls angeordnet sein. Der Nebenstrahl 32 ist dem Strahlformer 13 zugeführt. In dem gezeigten Ausführungsbeispiel ist der Strahlformer 13 als programmierbarer Spatial Light Modulator (SLM) ausgebildet. Es ist jedoch auch denkbar, dass der Strahlformer 13 als festes diffraktives optisches Element (DOE) oder als refraktive Strahlformungslinsen ausgebildet ist. Ebenfalls denkbar ist es, den Strahlformer 13 als Amplitudenmodulator auszubilden. Entsprechend einer weiteren möglichen Ausführungsvariante der Erfindung kann der Strahlformer 13 als "Digital Micromirror Device" in Form von ein- oder zweidimensionalen Anordnungen bewegbarer Spiegel ausgeführt sein.

Durch den vorliegend diffraktiven Strahlformer 13 wird die Wellenfront des Nebenstrahls lokal unterschiedlich verzögert und dadurch geformt. Es ist auch denkbar, einen Amplitudenmodulator als Strahlformer einzusetzen, bei dem dann entsprechend die Amplitude verändert wird. Durch den Strahlformer 13 wird so ein geformter Nebenstrahl 32.1 gebildet. Der geformte Nebenstrahl 32.1 wird auf einen optischen Positionssensor 11 abgebildet. Dazu ist in dem gezeigten Ausführungsbeispiel eine Linse 12 in dem Strahlengang des geformten Nebenstrahls 32.1 angeordnet. Der Strahlformer 13, die Linse 12 und der optische Positionssensor 11 sind vorliegend dem Strahllagesensor 10 zugeordnet. Der optische Positionssensor 11 ist mit einer Signalleitung 25 mit der Steuereinheit 24 verbunden. Der optische Positionssensor 11 ermöglicht die zweidimensionale ortsaufgelöste Erfassung der Intensität des auf seiner Messebene abgebildeten, geformten Nebenstrahls 32.1. Er ist vorliegend als CCD-Chip ausgebildet. Entsprechend denkbarer Erfindungsvarianten kann der optische Positionssensor 11 jedoch auch durch Fotodioden, durch einen CMOS-Chip oder durch Matrixsensoren mit paralleler Auswertung ausgebildet sein.

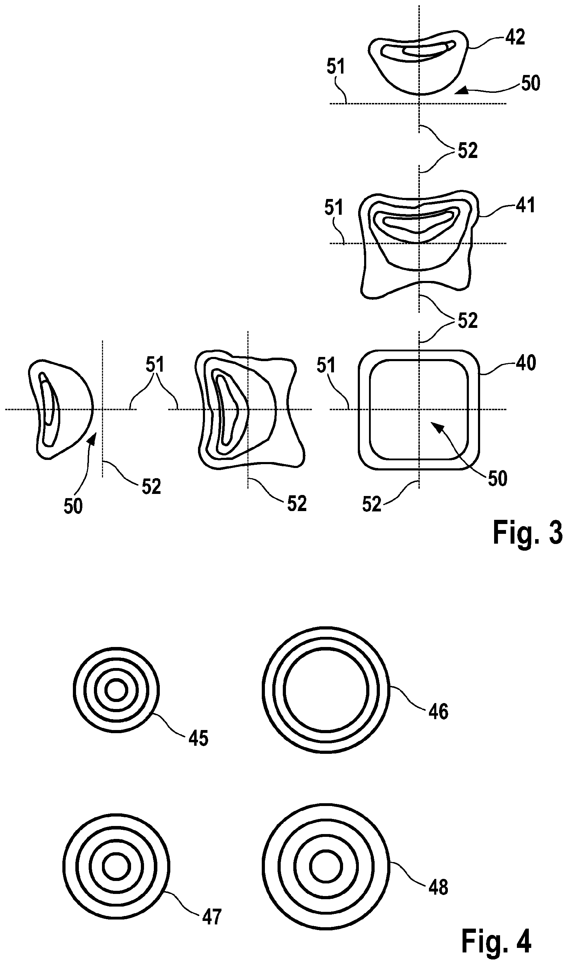

Der Strahlformer 13 verändert das Strahlprofil des Nebenstrahls 32. Das Ergebnis der Strahlformung durch den Strahlformer 13 reagiert dabei sehr empfindlich gegenüber der Position, auf welcher der ungeformte Nebenstrahl 32 auf den Strahlformer 13 trifft. Trifft der Nebenstrahl 32 nicht in der gewünschten Position auf den Strahlformer 13, so verändert sich die beispielhaft in den Figuren 3 und 4 gezeigte Intensitätsverteilung 40, 41, 42, 43, 44, 45, 46, 47, 48 des geformten Nebenstrahls 32.1 auf dem optischen Positionssensor 11 sehr stark. Die mit dem optischen Positionssensor 11 ermittelte Intensitätsverteilung 40, 41, 42, 43, 44, 45, 46, 47, 48 entspricht dann nicht mehr der erwarteten Intensitätsverteilung 40, 41, 42, 43, 44, 45, 46, 47, 48, wie sie bei einem exakt zum Strahlformer 13 ausgerichteten Nebenstrahl 32 erhalten wird. Aus der Veränderung der Intensitätsverteilung 40, 41, 42, 43, 44, 45, 46, 47, 48 im Fokus des geformten Nebenstrahls 32.1 kann daher die Strahlposition des Laserstrahls 30 sehr genau bestimmt werden. Da die geometrische Lage des Nebenstrahls 32 eindeutig mit der Lage des Laserstrahls 30 korreliert, führt eine laterale Verschiebung des Laserstrahls 30 gegenüber einer optischen Achse zu einer entsprechenden Verschiebung des ausgekoppelten Nebenstrahls 32. Durch die sehr starke Abhängigkeit der Strahlformung von der Stelle, auf der der Nebenstrahl 32 auf den Strahlformer 13 trifft, kann die Lage des Laserstrahls 30 in X- und in Y-Richtung im Mikrometerbereich bestimmt werden.

Aus der Lage der Position des Fokus des auf dem optischen Positionssensor 11 abgebildeten, geformten Nebenstrahls 32.1 kann der Ausbreitungswinkel des Laserstrahls 30 ermittelt werden. Der geneigt verlaufende Laserstrahls 30 führt zu einem entsprechend geneigt verlaufenden Nebenstrahls 32 und geformten Nebenstrahl 32.1. Ein solcher in einem Winkel auf die Linse 12 einfallender, geformter Nebenstrahl 32.1 bewirkt einen auswertbaren seitlichen Versatz des Fokus des auf dem optischen Positionssensor 11 abgebildeten, geformten Nebenstrahls 32.1 gegenüber einer optischen Achse. Das Strahllagenmesssystem ermöglicht so, mit ausschließlich nur einem optischen Positionssensor 11 sowohl eine laterale Verschiebung als auch eine Abweichung des Ausbreitungswinkels des Laserstrahls 30 gegenüber einer optischen Achse sowohl in X- als auch in Y-Richtung zu bestimmen. Zusätzlich kann auch eine Änderung des Durchmessers des Laserstrahls 30 aus der Intensitätsverteilung 40, 41, 42, 43, 44, 45, 46, 47, 48 im Fokus des auf dem optischen Positionssensor 11 abgebildeten, geformten Nebenstrahls 32.1 bestimmt werden. Eine solche Änderung des Durchmessers des Laserstrahls 30 resultiert in einer charakteristischen und unterscheidbaren Veränderung des Strahlprofils, wie dies näher in Figur 4 gezeigt ist.

Der optische Positionssensor 11 misst in seiner Messebene ortsaufgelöst die Lichtintensität. Das so erhaltene Messsignal wird über die Signalleitung 25 an die Steuereinheit 24 weitergeleitet. Diese ermittelt aus dem Messsignal die Lageabweichung (laterale Abweichung in X- und Y-Richtung, Winkelabweichung in X- und Y-Richtung und/oder Abweichung des Durchmessers) des Laserstrahls 30. Sie steuert daraufhin nicht gezeigte Aktuatoren an, welche den Strahlengang des Laserstrahls 30 beeinflussen. Im gezeigten Ausführungsbeispiel werden über die erste Steuerleitung 26.1 ein Aktuator zur Einstellung des ersten verstellbaren Spiegels 21 und über die zweite Steuerleitung 26.2 ein Aktuator zur Einstellung des zweiten verstellbaren Spiegels 22 angesteuert. Dabei erfolgt die Verstellung der Spiegel 21, 22 derart, dass anschließend die gemessene Intensitätsverteilung 40, 41, 42, 43, 44, 45, 46, 47, 48 im Fokus des geformten Nebenstrahls 32.1 sowie die Lage des Fokus des geformten Nebenstrahls 32.1 den Vorgaben für einen entlang der optischen Achse verlaufenden Laserstrahl 30 entspricht. Es ist denkbar, auch weitere, nicht gezeigte optische Komponenten im Strahlengang des Laserstrahls 30 mittels Aktuatoren zu verstellen und so beispielsweise den Durchmesser des Laserstrahls 30 zu verändern.

Entsprechend eines weiterführenden Gedankens der Erfindung ist es denkbar, durch den Strahlformer 13 zusätzlich zur Strahlformung eine Fresnel-Linse zu modulieren. Der Strahlformer 13 ist dazu vorzugsweise als diffraktives optisches Element oder als SLM ausgebildet. Auf die Linse 12 zur Abbildung des geformten Nebenstrahls 32.1 auf dem Positionssensor 11 kann so verzichtet werden. Dadurch kann das Strahllagenmesssystem weiter vereinfacht werden.

Figur 2 zeigt das in Figur 1 gezeigte Strahllagenmesssystem mit dem Strahlformer 13 im Strahlengang eines Laserstrahls 30. Gleiche Bauteile sind dabei wie zu Figur 1 eingeführt gleich bezeichnet. Im Strahlengang des Nebenstrahls 32 ist somit kein weiterer Strahlformer 13 erforderlich. Der Strahlformer 13 wird für den mit dem Laserstrahl 30 ausgeführten Bearbeitungsprozess verwendet. Dies kann sinnvoll sein, wenn von einer gaußförmigen Intensitätsverteilung abweichende Strahlformen des Laserstrahls 30 bessere Ergebnisse bei der Materialbearbeitung erzielen. Mit Hilfe des in den Strahlengang des Laserstrahls 30 eingeführten Strahlformers 13 wird somit ein geformter Laserstrahl 30.1 gebildet. Dieser wird in dem Strahlteiler 14 in einen geformten Prozessstrahl 31.1 und den geformten Nebenstrahl 32.1 geteilt. Das Messprinzip zur Bestimmung der Strahllage und des Strahldurchmessers entspricht dem zu Figur 1 beschriebenen Messprinzip. Vorteilhaft wird bei dem in Figur 2 gezeigten Aufbau ein ohnehin für den Bearbeitungsprozess vorgesehener Strahlformer 13 verwendet, sodass nur wenige zusätzliche Komponenten erforderlich sind, um die Lage und den Durchmesser des Strahls zu bestimmen.

Figur 3 zeigt Intensitätsprofile und Fokuslagen eines geformten Nebenstrahls 32.1 bei verschiedenen Abweichungen eines Laserstrahls 30 von einer optischen Achse. Dabei ist der in den Figuren 1 und 2 gezeigte Strahlformer 13 zur Wandlung eines Laserstrahls 30 bzw. Nebenstrahls 32 mit einer gaußförmigen Intensitätsverteilung in einen geformten Laserstrahl 30.1 bzw. geformten Nebenstrahl 32.1 mit einer rechteckigen Intensitätsverteilung (Tophat) ausgebildet.

Die dargestellten ersten, zweiten, dritten, vierten und fünften Intensitätsverteilungen 40, 41, 42, 43, 44 sind jeweils gegenüber einem Koordinatensystem 50 mit einer X-Achse 51 und einer Y-Achse 52 dargestellt. Sie sind jeweils im Fokus des auf dem optischen Positionssensor 11 (Figur 1 und 2) abgebildeten, geformten Nebenstrahls 32.1 aufgenommen. Dabei verlaufen die gezeigten Linien entlang von Bereichen gleicher Lichtintensität, wobei die Lichtintensität zu den inneren umkreisten Bereichen hin zunimmt. Der Ursprung der jeweiligen Koordinatensysteme 50 entspricht der optischen Achse des Strahllagesensors 10. Die erste Intensitätsverteilung 40 zeigt das gewünschte achssymmetrische, rechteckige Strahlprofil des geformten Nebenstrahls 32.1. Dieses wird erhalten, wenn sich der Laserstrahl 30 entlang der vorgesehenen optischen Achse ausbreitet und dadurch der ausgekoppelte Nebenstrahl 32 exakt in der vorgegebenen Position auf den Strahlformer 13 trifft. Der Fokus der ersten Intensitätsverteilung ist zentrisch auf den Ursprung des Koordinatensystems 50 und damit der optischen Achse des Strahllagesensors 10 ausgerichtet. Der Laserstrahl 30 verläuft somit ohne seitlichen Versatz und ohne Winkelversatz zu der vorgesehenen optischen Achse seiner Strahlführung. Die zweite Intensitätsverteilung 41 wird erhalten, wenn der Laserstrahl 30 entlang einer Y-Achse verschoben ist. Sie weicht deutlich von der Rechteckform der ersten Intensitätsverteilung 40 ab. Dabei verschiebt sich das Maximum der Lichtintensität zu einem seitlichen Rand des Fokus des geformten Nebenstrahls 32.1. Der Rand, dem das Maximum der Lichtintensität zugewandt ist, ist zur einfachen Unterscheidung der Y-Richtung zugeordnet. Der Fokus selbst ist weiterhin auf den Ursprung des Koordinatensystems 50 und damit die optische Achse des Strahllagesensors 10 ausgerichtet. Anhand der ermittelten zweiten Intensitätsverteilung kann somit zweifelsfrei zurückgerechnet werden, dass sich der Laserstrahl 30 ohne Winkelversatz, jedoch parallel in Y-Richtung verschoben zur optischen Achse ausbreitet. Die dritte Intensitätsverteilung 42 wird erhalten, wenn sich der Laserstrahl 30 um einen Winkel α um die X-Achse gekippt und mit seitlichem Versatz gegenüber der optischen Achse der Strahlführung des Laserstrahls 30 ausbreitet. Der geformte Nebenstrahl 32.1 trifft dadurch unter einem Winkel auf die in den Figuren 1 und 2 gezeigte Linse 12 und wird dadurch seitlich der optischen Achse des Strahllagesensors 10 abgebildet. Damit ist der Fokus des auf dem optischen Positionssensor 11 abgebildeten, geformten Nebenstrahls 32.1 in Y-Richtung zum Ursprung des zugeordneten Koordinatensystems 50 angeordnet. Entsprechend der zweiten Intensitätsverteilung 41 wird die vierte Intensitätsverteilung 43 erhalten, wenn der Laserstrahl 30 entlang der X-Achse parallel zu seiner optischen Achse verschoben ist. Die fünfte Intensitätsverteilung 44 wird erhalten, wenn sich der Laserstrahl 30 um einen Winkel β um die Y-Achse verkippt und mit lateralem Versatz zur optischen Achse ausbreitet. Aus der dargestellten Intensitätsverteilung 40, 41, 42, 43, 44 und Fokusposition kann die Lage des Laserstrahls 30 quantitativ berechnet werden.

In der praktischen Anwendung können sich die Positionierungsfehler überlagern. Die Lage des einfallenden Laserstrahls 30 kann jedoch aus der mit dem optischen Positionssensor 11 aufgenommenen Art der Profilverformung eindeutig bestimmt werden, indem die Überlagerungen der Verschiebungen auseinandergerechnet werden.

Die Empfindlichkeit, mit der sich die in den Figuren 3 und 4 gezeigten Intensitätsverteilung 40, 41, 42, 43, 44, 45, 46, 47, 48 bei einem Strahllagefehler des Laserstrahls 30 gegenüber einer vorgegebenen ersten Intensitätsverteilung 40 verändert, hängt stark von der Strahlformung selbst ab. Somit ist es denkbar, unterschiedliche Strahlformen für die Grob- und Feinvermessung der Strahllage zu verwenden. Die Intensitätsverteilung des geformten Nebenstrahls 32.1 ist vorteilhaft so gewählt, dass sie leicht auszuwerten ist und sich bei einer Abweichung der Strahllage des Laserstrahls 30 von der gewünschten Position schnell ändert. Die Strahlformung und die Abbildung des geformten Nebenstrahls 32.1 sind weiterhin vorteilhaft derart ausgeführt, dass eine möglichst große Fläche des Messbereichs des optischen Positionssensors 11 abgedeckt wird.

Figur 4 zeigt Intensitätsprofile eines geformten Nebenstrahls 32.1 bei unterschiedlichen Durchmessern eines einfallenden Laserstrahls 30. Eine sechste Intensitätsverteilung 45 entspricht dem Intensitätsprofil eines gaußförmigen Laserstrahls 30 mit einem Radius von 1 mm. Durch den Strahlformer 13 und die Linse 12 wird daraus ein runder Fokus mit einer runden siebten Intensitätsverteilung 46 geformt und auf dem optischen Positionssensor 11 abgebildet. Der Durchmesser des erhaltenen Fokus beträgt vorliegend ca. 200 µm. Eine achte Intensitätsverteilung 47 entspricht einem Laserstrahl 30 mit einem vorliegend auf 1,5 mm aufgeweiteten Radius. Durch den veränderten Radius des einfallenden Laserstrahls 30 ändert sich die Form des geformten Nebenstrahls 32.1, wie dies durch eine neunte Intensitätsverteilung 48 gezeigt ist. Dabei ist die neunte Intensitätsverteilung 48 weiterhin symmetrisch zur optischen Achse ausgebildet. Eine Abweichung des Durchmessers des Laserstrahls 30 kann somit eindeutig nachgewiesen und von einer lateralen Verschiebung des Laserstrahls oder eine Abweichung der Ausbreitungsrichtung des Laserstrahls unterschieden werden. Durch das erfindungsgemäße Strahllagenmesssystem und das erfindungsgemäße Verfahren kann somit mit ausschließlich nur einem optischen Positionssensor 11 eine laterale Verschiebung, eine Abweichung der Ausbreitungsrichtung sowie eine Abweichung des Durchmessers eines Laserstrahls 30 von entsprechenden Vorgaben eindeutig erkannt werden. Dadurch wird es möglich, beispielsweise durch einen Regelkreis eine automatisierte Korrektur der Strahllage und/oder des Durchmessers des Laserstrahls 30 durchzuführen.

## Patentansprüche

1. Strahllagenmesssystem zur Bestimmung der Strahllage eines Laserstrahls (30), mit einem Strahlteiler (14) zur Auskopplung eines Nebenstrahls (32) aus dem Laserstrahl (30) und einem in dem Nebenstrahl (32) angeordneten, optischen Positionssensor (11), wobei in dem Strahlengang des Nebenstrahls (32) oder in dem Strahlengang des Laserstrahls (30) vor dem Strahlteiler (14) ein Strahlformer (13) angeordnet ist, wobei das Intensitätsprofil des Nebenstrahls (32) durch den Strahlformer (13) geformt ist und der geformte Nebenstrahl (32) auf den optischen Positionssensor (11) abgebildet ist, **dadurch gekennzeichnet, dass** der optische Positionssensor (11) ausgebildet ist eine Intensität des auf seiner Messebene abgebildeten, geformten Nebenstrahls (32) zweidimensional ortsaufgelöste zu erfassen und dadurch eine Intensitätsverteilung (40, 41, 42, 43, 44, 46, 48) des geformten Nebenstrahls (32.1) bestimmbar ist, wobei das Strahllagenmesssystem dazu ausgebildet ist, auf Grundlage einer erfassten Veränderung der ermittelten Intensitätsverteilung gegenüber einer erwarteten Intensitätsverteilung bei einer korrekten Stahllage des Laserstrahles (30) die aktuelle Strahllage des Laserstrahls (30) zu bestimmen.

2. Strahllagenmesssystem nach Anspruch 1, **dadurch gekennzeichnet, dass** mit dem optischen Positionssensor (11) eine Lage des Fokus des geformten Nebenstrahles (32) und/oder eine Lage des Nebenstrahles (32) auf dem Positionssensor (11) bestimmbar ist.

3. Strahllagenmesssystem nach Anspruch 1 oder 2, **dadurch gekennzeichnet, dass** als Strahllage eine laterale Position des Laserstrahls (30) und/oder zumindest ein Ausbreitungswinkel des Laserstrahls (30) und/oder ein Durchmesser des Laserstrahls (30) bestimmbar ist.

4. Strahllagenmesssystem nach einem der vorhergehenden Ansprüchen, **dadurch gekennzeichnet, dass** der Laserstrahl (30) ein Gaußprofil aufweist, wobei der Strahlformer(13) bei korrekter Stahllage des Laserstrahles (30) das Gaußprofil in ein gewünschtes Profil mit achssymmetrischer Intensitätsverteilung in der Abbildungsebene auf dem Positionssensor (11) formt, wobei bei einer ermittelten unsymmetrischen Umverteilung der Intensitätsverteilung des geformten Nebenstrahls (32) auf dem Positionssensor (11) eine laterale Verschiebung des Laserstrahls (30) bestimmbar ist und wobei bei einer ermittelten rotationssymmetrischen Umverteilung der Intensitätsverteilung des geformten Nebenstrahls (39) auf dem Positionssensor (11) eine Abweichung des Durchmessers des Laserstrahls (30) bestimmbar ist.

5. Strahllagenmesssystem nach einem der vorhergehenden Ansprüche, **dadurch gekennzeichnet, dass** der Strahlformer (13) als programmierbarer Strahlformer oder als diffraktives optisches Element oder als refraktives optisches Element oder als Amplitudenmodulator oder als kombinierter Amplituden- und Phasenmodulator ausgebildet ist.

6. Strahllagenmesssystem nach einem der vorhergehenden Ansprüche, **dadurch gekennzeichnet, dass** nach dem Strahlformer (13) ein refraktives oder diffraktives Abbildungssystem zur Abbildung des geformten Nebenstrahls (32.1) auf den Positionssensor (11) angeordnet ist oder dass der Strahlformer (13) Strukturen einer Fresnel-Linse zur Abbildung des geformten Nebenstrahls (32.1) auf den Positionssensor (11) aufweist oder dass der Strahlformer (13f) als diffraktiver Strahlformer (13) auf einer refraktiven Linse (12) aufgebracht ist oder dass ein refraktiver Strahlformer mit refraktiv fokussierenden Eigenschaften verwendet ist.

7. Strahllagenmesssystem nach einem der vorhergehenden Ansprüche, **dadurch gekennzeichnet, dass** die Empfindlichkeit des Strahllagenmesssystems gegenüber einer Abweichung der Strahllage des Laserstrahls (30) durch Verwendung von Strahlformern (13) mit unterschiedlichen Formungsmustern einstellbar ist.

8. Strahllagenmesssystem nach einem der vorhergehenden Ansprüche, **dadurch gekennzeichnet, dass** das Strahllagenmesssystem Mittel zur selbstständigen Korrektur der Strahllage des Laserstrahles aufweist, indem das Signal des Positionssensors (11) einer Steuereinheit (24) zugeführt ist und dass die Steuereinheit (24) zur Korrektur der Strahllage mittels zumindest eines mit der Steuereinheit (24) verbundenen Aktuators ausgebildet ist.

9. Verfahren zur Bestimmung der Strahllage eines Laserstrahls (30), wobei mit einem Strahlteiler (14) ein Nebenstrahl (32) aus dem Laserstrahl (30) ausgekoppelt und auf einem optischen Positionssensor (11) abgebildet wird, wobei der Laserstrahl (30) oder der Nebenstrahl (32) einem Strahlformer (13) zugeführt wird und ein durch den Strahlformer (13) geformter Nebenstrahl (32.1) mit seinem Intensitätsprofil auf den optischen Positionssensor (11) abgebildet wird, **dadurch gekennzeichnet, dass** durch den optischen Positionssensor (11) eine Intensität des auf seiner Messebene abgebildeten, geformten Nebenstrahls (32) zweidimensional ortsaufgelöste erfasst wird und dabei mit dem optischen Positionssensor (11) eine Intensitätsverteilung (40, 41, 42, 43, 44, 46, 48) des geformten Nebenstrahls (32.1) ermittelt wird, wobei dann auf Grundlage einer erfassten Veränderung der ermittelten Intensitätsverteilung gegenüber einer erwarteten Intensitätsverteilung bei einer korrekten Stahllage des Laserstrahles (30) die aktuelle Strahllage des Laserstrahls (30) bestimmt wird.

10. Verfahren nach Anspruch 9, **dadurch gekennzeichnet, dass** aus der ermittelten Intensitätsverteilung (40, 41, 42, 43, 44, 46, 48) des geformten Nebenstrahls (32.1) eine laterale Verschiebung des Laserstrahls (30) bestimmt wird und/oder ein Durchmesser des Laserstrahls (30) bestimmt wird und/oder dass aus einer seitlichen Verschiebung des Fokus des geformten Nebenstrahls (32.1) auf dem Positionssensor (11) ein Ausbreitungswinkel des Laserstrahls (30) bestimmt wird.

11. Verfahren nach Anspruch 9 oder 10, **dadurch gekennzeichnet, dass** der Laserstrahl (30) ein Gaußprofil aufweist, dass der Strahlformer (13) das Gaußprofil in ein gewünschtes Profil formt und dass bei einer unsymmetrischen Umverteilung der Intensitätsverteilung (40, 41, 42, 43, 44, 46, 48) des geformten Nebenstrahls (32.1) auf dem Positionssensor (11) auf eine laterale Verschiebung des Laserstrahls (30) geschlossen wird und dass bei einer rotationssymmetrischen Umverteilung der Intensitätsverteilung (40, 41, 42, 43, 44, 46, 48) des geformten Nebenstrahls (32.1) auf dem Positionssensor (11) auf eine Abweichung des Durchmessers des Laserstrahls (30) geschlossen wird.

12. Verwendung des Strahllagenmesssystems nach einem der Ansprüche 1 bis 8 zur Durchführung des Verfahrens nach einem der Ansprüche 9 bis 11.

## Claims

1. Beam alignment measuring system for determining the beam alignment of a laser beam (30), comprising a beam splitter (14) for output coupling a secondary beam (32) from the laser beam (30) and an optical position sensor (11) arranged in the secondary beam (32), with a beam shaper (13) being arranged in the beam path of the secondary beam (32) or in the beam path of the laser beam (30) upstream of the beam splitter (14), the intensity profile of the secondary beam (32) being shaped by the beam shaper (13) and the shaped secondary beam (32) being imaged on the optical position sensor (11), **characterized in that** the optical position sensor (11) is designed to detect, with two-dimensional spatial resolution, an intensity of the shaped secondary beam (32) imaged on the measuring plane of the said optical position sensor and an intensity distribution (40, 41, 42, 43, 44, 46, 48) of the shaped secondary beam (32.1) is determinable as a result, the beam alignment measuring system being designed to determine the current beam alignment of the laser beam (30) on the basis of a detected change in the ascertained intensity distribution vis-à-vis an expected intensity distribution in the case of a correct beam alignment of the laser beam (30).

2. Beam alignment measuring system according to Claim 1, **characterized in that** a position of the focus of the shaped secondary beam (32) and/or a position of the secondary beam (32) on the position sensor (11) is determinable using the optical position sensor (11).

3. Beam alignment measuring system according to Claim 1 or 2, **characterized in that** a lateral position of the laser beam (30) and/or at least one propagation angle of the laser beam (30) and/or a diameter of the laser beam (30) is determinable as the beam alignment.

4. Beam alignment measuring system according to any one of the preceding claims, **characterized in that** the laser beam (30) has a Gaussian profile, with the beam shaper (13) shaping the Gaussian profile into a desired profile with an axisymmetric intensity distribution in the imaging plane on the position sensor (11) in the case of a correct beam alignment of the laser beam (30), with a lateral displacement of the laser beam (30) being determinable in the case of an ascertained unsymmetric redistribution of the intensity distribution of the shaped secondary beam (32) on the position sensor (11) and with a deviation of the diameter of the laser beam (30) being determinable in the case of an ascertained rotationally symmetric redistribution of the intensity distribution of the shaped secondary beam (39) on the position sensor (11).

5. Beam alignment measuring system according to any one of the preceding claims, **characterized in that** the beam shaper (13) is embodied as a programmable beam shaper or as a diffractive optical element or as a refractive optical element or as an amplitude modulator or as a combined amplitude and phase modulator.

6. Beam alignment measuring system according to any one of the preceding claims, **characterized in that** a refractive or diffractive imaging system for imaging the shaped secondary beam (32.1) on the position sensor (11) is arranged downstream of the beam shaper (13) or **in that** the beam shaper (13) has structures of a Fresnel lens for imaging the shaped secondary beam (32.1) on the position sensor (11) or **in that** the beam shaper (13f), as a diffractive beam shaper (13), is applied to a refractive lens (12) or **in that** use is made of a refractive beam shaper with refractively focusing properties.

7. Beam alignment measuring system according to any one of the preceding claims, **characterized in that** the sensitivity of the beam alignment measuring system vis-à-vis a deviation of the beam alignment of the laser beam (30) is adjustable by using beam shapers (13) with different shaping patterns.

8. Beam alignment measuring system according to any one of the preceding claims, **characterized in that** the beam alignment measuring system has means for independently correcting the beam alignment of the laser beam by virtue of the signal of the position sensor (11) being supplied to a control unit (24) and **in that** the control unit (24) is designed to correct the beam alignment by means of at least one actuator that is connected to the control unit (24) .

9. Method for determining the beam alignment of a laser beam (30), with a secondary beam (32) being output coupled from the laser beam (30) using a beam splitter (14) and being imaged on an optical position sensor (11), with the laser beam (30) or the secondary beam (32) being supplied to a beam shaper (13) and a secondary beam (32.1) shaped by the beam shaper (13) being imaged, with the intensity profile thereof, on the optical position sensor (11), **characterized in that** an intensity of the shaped secondary beam (32) imaged on the measuring plane of the optical position sensor (11) is detected with two-dimensional spatial resolution by the said optical position sensor and, in doing so, an intensity distribution (40, 41, 42, 43, 44, 46, 48) of the shaped secondary beam (32.1) is ascertained using the optical position sensor (11), with the current beam alignment of the laser beam (30) then being determined on the basis of a detected change in the ascertained intensity distribution vis-à-vis an expected intensity distribution in the case of a correct beam alignment of the laser beam (30).

10. Method according to Claim 9, **characterized in that** a lateral displacement of the laser beam (30) is determined from the ascertained intensity distribution (40, 41, 42, 43, 44, 46, 48) of the shaped secondary beam (32.1) and/or a diameter of the laser beam (30) is determined and/or **in that** a propagation angle of the laser beam (30) is determined from a lateral displacement of the focus of the shaped secondary beam (32.1) on the position sensor (11).

11. Method according to Claim 9 or 10, **characterized in that** the laser beam (30) has a Gaussian profile, **in that** the beam shaper (13) shapes the Gaussian profile into a desired profile and **in that** a lateral displacement of the laser beam (30) is deduced in the case of an unsymmetric redistribution of the intensity distribution (40, 41, 42, 43, 44, 46, 48) of the shaped secondary beam (32.1) on the position sensor (11) and **in that** a deviation of the diameter of the laser beam (30) is deduced in the case of a rotationally symmetric redistribution of the intensity distribution (40, 41, 42, 43, 44, 46, 48) of the shaped secondary beam (32.1) on the position sensor (11) .

12. Use of the beam alignment measuring system according to any one of Claims 1 to 8 for carrying out the method according to any one of Claims 9 to 11.

## Revendications

1. Système de mesure de position de faisceau permettant de déterminer la position de faisceau d'un faisceau laser (30), comprenant un séparateur de faisceau (14) pour découpler un faisceau secondaire (32) à partir du faisceau laser (30), et un capteur de position optique (11), disposé dans le faisceau secondaire (32), dans lequel un formateur de faisceau (13) est disposé avant le séparateur de faisceau (14) sur la trajectoire de faisceau du faisceau secondaire (32) ou sur la trajectoire de faisceau du faisceau laser (30), dans lequel le profil d'intensité du faisceau secondaire (32) est formé par le formateur de faisceau (13) et le faisceau secondaire formé (32) est représenté sur le capteur de position optique (11),
**caractérisé en ce que** le capteur de position optique (11) est réalisé pour détecter avec une résolution spatiale bidimensionnelle une intensité du faisceau secondaire formé (32), représenté sur le plan de mesure de celui-ci, et une distribution d'intensité (40, 41, 42, 43, 44, 46, 48) du faisceau secondaire formé (32.1) peut ainsi être déterminée, dans lequel le système de mesure de position de faisceau est réalisé pour déterminer la position de faisceau actuelle du faisceau laser (30) sur la base d'une modification détectée de la distribution d'intensité établie par rapport à une distribution d'intensité prévue dans le cas d'une position de faisceau correcte du faisceau laser (30).

2. Système de mesure de position de faisceau selon la revendication 1, **caractérisé en ce que** le capteur de position optique (11) permet de déterminer une position du foyer du faisceau secondaire formé (32) et/ou une position du faisceau secondaire (32) sur le capteur de position (11).

3. Système de mesure de position de faisceau selon la revendication 1 ou 2, **caractérisé en ce qu'**une position latérale du faisceau laser (30) et/ou au moins un angle de propagation du faisceau laser (30) et/ou un diamètre du faisceau laser (30) peuvent être déterminés comme position de faisceau.

4. Système de mesure de position de faisceau selon l'une quelconque des revendications précédentes, **caractérisé en ce que** le faisceau laser (30) présente un profil de Gauss, dans lequel le formateur de faisceau (13), dans le cas d'une position de faisceau correcte du faisceau laser (30), met en forme sur le capteur de position (11) le profil de Gauss en un profil souhaité ayant une distribution d'intensité à symétrie axiale dans le plan de représentation, dans lequel, dans le cas d'une redistribution non symétrique établie de la distribution d'intensité du faisceau secondaire formé (32) sur le capteur de position (11), un décalage latéral du faisceau laser (30) peut être déterminé, et dans lequel, dans le cas d'une redistribution à symétrie de révolution établie de la distribution d'intensité du faisceau secondaire formé (39) sur le capteur de position (11), un écart du diamètre du faisceau laser (30) peut être déterminé.

5. Système de mesure de position de faisceau selon l'une quelconque des revendications précédentes, **caractérisé en ce que** le formateur de faisceau (13) est réalisé sous la forme d'un formateur de faisceau programmable ou d'un élément optique diffractif ou d'un élément optique réfractif ou d'un modulateur d'amplitude ou d'un modulateur d'amplitude et de phase combiné.

6. Système de mesure de position de faisceau selon l'une quelconque des revendications précédentes, **caractérisé en ce qu'**un système de représentation réfractif ou diffractif pour représenter le faisceau secondaire formé (32.1) sur le capteur de position (11) est disposé après le formateur de faisceau (13), ou **en ce que** le formateur de faisceau (13) présente des structures d'une lentille de Fresnel pour représenter le faisceau secondaire formé (32.1) sur le capteur de position (11), ou **en ce que** le formateur de faisceau (13f) est appliqué sous la forme d'un formateur de faisceau diffractif (13) sur une lentille réfractive (12), ou **en ce qu'**un formateur de faisceau réfractif ayant des propriétés de focalisation réfractive est utilisé.

7. Système de mesure de position de faisceau selon l'une quelconque des revendications précédentes, **caractérisé en ce que** la sensibilité du système de mesure de position de faisceau à un écart de la position de faisceau du faisceau laser (30) est réglable en utilisant des formateurs de faisceau (13) ayant différents motifs de mise en forme.

8. Système de mesure de position de faisceau selon l'une quelconque des revendications précédentes, **caractérisé en ce que** le système de mesure de position de faisceau présente des moyens pour l'autocorrection de la position de faisceau du faisceau laser **en ce que** le signal du capteur de position (11) est amené à une unité de commande (24), et **en ce que** l'unité de commande (24) est réalisée pour corriger la position de faisceau au moyen d'au moins un actionneur relié à l'unité de commande (24).

9. Procédé permettant de déterminer la position de faisceau d'un faisceau laser (30), dans lequel un séparateur de faisceau (14) découple un faisceau secondaire (32) à partir du faisceau laser (30) et le représente sur un capteur de position optique (11), dans lequel le faisceau laser (30) ou le faisceau secondaire (32) est amené à un formateur de faisceau (13), et un faisceau secondaire (32.1) formé par le formateur de faisceau (13) avec son profil d'intensité est représenté sur le capteur de position optique (11),
**caractérisé en ce que** le capteur de position optique (11) détecte avec une résolution spatiale bidimensionnelle une intensité du faisceau secondaire formé (32), représenté sur le plan de mesure de celui-ci, et ainsi une distribution d'intensité (40, 41, 42, 43, 44, 46, 48) du faisceau secondaire formé (32.1) est établie à l'aide du capteur de position optique (11), dans lequel ensuite la position de faisceau actuelle du faisceau laser (30) est déterminée sur la base d'une modification détectée de la distribution d'intensité établie par rapport à une distribution d'intensité prévue dans le cas d'une position de faisceau correcte du faisceau laser (30).

10. Procédé selon la revendication 9, **caractérisé en ce qu'**un décalage latéral du faisceau laser (30) est déterminé à partir de la distribution d'intensité (40, 41, 42, 43, 44, 46, 48) du faisceau secondaire formé (32.1), et/ou un diamètre du faisceau laser (30) est déterminé, et/ou un angle de propagation du faisceau laser (30) est déterminé à partir d'un décalage latéral du foyer du faisceau secondaire formé (32.1) sur le capteur de position (11).

11. Procédé selon la revendication 9 ou 10, **caractérisé en ce que** le faisceau laser (30) présente un profil de Gauss, **en ce que** le formateur de faisceau (13) met en forme le profil de Gausse en un profil souhaité, et **en ce que** dans le cas d'une redistribution non symétrique de la distribution d'intensité (40, 41, 42, 43, 44, 46, 48) du faisceau secondaire formé (32.1) sur le capteur de position (11), un décalage latéral du faisceau laser (30) est inféré, et **en ce que** dans le cas d'une redistribution à symétrie de révolution de la distribution d'intensité (40, 41, 42, 43, 44, 46, 48) du faisceau secondaire formé (32.1) sur le capteur de position (11), un écart du diamètre du faisceau laser (30) est inféré.

12. Utilisation du système de mesure de position de faisceau selon l'une quelconque des revendications 1 à 8 pour exécuter le procédé selon l'une quelconque des revendications 9 à 11.
